# DEMANDE DE BREVET EUROPEEN

(11) **EP 3 975 357 A1**
(43) Date de publication de la demande: **30.03.2022**
(21) Numéro de dépôt: 21153691.7
(22) Date de dépôt: 27.01.2021
(51) Int. Cl.: H02G 1/12

(54) **DISPOSITIF ET PROCÉDÉ DE PRÉ-ÉCARTEMENT D'UNE TRESSE D'UN CABLE ÉLECTRIQUE, DISPOSITIF, INSTALLATION ET PROCÉDÉ D'ÉCARTEMENT D'UNE TELLE TRESSE**

(30) Priorité: 28.09.2020 FR 2009840
(71) Demandeur: Larisys Industries, 67220 Neuve Eglise (FR)
(72) Inventeur: LATOUR, Sylvain, 67600 BALDENHEIM (FR); HINDERSCHIETTE, Patrick, 67570 ROTHAU (FR)
(74) Mandataire: Cabinet Bleger-Rhein-Poupon

(57) **Abrégé**

L'invention concerne un dispositif de pré-écartement (1) d'une tresse (D) que comporte un câble électrique (A). Cette invention concerne, encore, un procédé de pré-écartement d'une telle tresse (D).

L'invention concerne, aussi, un système d'écartement et un procédé d'écartement d'une tresse (D) d'un câble électrique (A). Cette invention concerne, également, une installation d'écartement d'une tresse (D) d'un câble électrique (A), ladite installation comportant ledit dispositif de pré-écartement (1) et ledit système d'écartement d'une telle tresse (D).

## Description

L'invention concerne un dispositif de pré-écartement d'une tresse d'un câble électrique. Cette invention concerne, également, un procédé de pré-écartement d'une telle tresse, un tel procédé étant susceptible d'être mis en œuvre par ledit dispositif de pré-écartement. L'invention concerne, encore, un système d'écartement d'une tresse d'un câble électrique. Cette invention concerne, également, un procédé d'écartement d'une telle tresse, un tel procédé étant susceptible d'être mis en œuvre par ledit système d'écartement. Finalement, l'invention concerne, une installation d'écartement d'une tresse d'un câble électrique. Une telle installation comporte ledit dispositif de pré-écartement ainsi que ledit système d'écartement.

Cette invention concerne le domaine de l'outillage permettant de réaliser la préparation des câbles électriques, plus particulièrement des câbles électriques coaxiaux, en vue de leur association à une fiche de connexion ou à une prise de connexion.

En fait, une telle préparation consiste, tout d'abord, à pré-écarter la tresse que comporte un tel câble électrique, ceci par rapport à une âme que comporte un tel câble électrique. Cette préparation consiste, ensuite et après avoir effectué un tel pré-écartement, à écarter cette tresse par rapport à ladite âme, ceci avec plus d'amplitude.

L'on connait, d'ores et déjà, des dispositifs permettant de pré-écarter une tresse que comporte un câble électrique, plus particulièrement un câble électrique coaxial.

Un tel dispositif de pré-écartement comporte un diaphragme qui est configuré pour se refermer sur la tresse d'un câble électrique, ceci en vue d'assurer un pré-écartement de ladite tresse. Un tel dispositif de pré-écartement comporte de nombreuses pièces en mouvement ce qui rend ce dispositif fragile, peu fiable, particulièrement complexe et onéreux. De plus, la mise en œuvre de ce dispositif de pré-écartement (en particulier du diaphragme) ne permet pas de démêler de manière suffisamment efficace les brins de la tresse qui, à la sortie du dispositif de pré-écartement, restent encore beaucoup emmêlés ce qui complexifie l'étape suivante qui consiste à écarter d'avantage la tresse par rapport à l'âme du câble électrique.

Un tel écartement est assuré par l'intermédiaire d'un système d'écartement qui comporte un tube creux à l'intérieur duquel est engagé l'âme du câble électrique alors que la tresse est maintenue à l'extérieur de ce tube creux. Ce système d'écartement comporte, encore, des moyens pour souffler de l'air au travers du tube creux, ceci en vue de démêler les brins de la tresse pour faciliter l'écartement de cette tresse. La présence de ces moyens pour souffler de l'air complexifie singulièrement la conception du système d'écartement et renchérit ce système d'écartement, ceci sans pour autant améliorer l'efficacité de l'écartement de la tresse. De plus, ces moyens pour souffler de l'air ont tendance à décoller un feuillard que comporte le câble électrique entre l'âme et la tresse. Ce feuillard se plaque, alors, contre la tresse de sorte qu'il est encore plus difficile de démêler les brins de cette tresse.

Finalement, le dispositif de pré-écartement et le système d'écartement sont regroupés au sein d'une même installation d'écartement d'une tresse d'un câble électrique. Cette installation s'avère complexe du point de vue mécanique et technique ainsi que particulièrement onéreuse.

Un objectif de la présente invention est d'améliorer le pré-écartement d'une tresse d'un câble électrique, ceci pour faciliter et rendre plus efficace l'écartement de cette tresse.

Un autre objectif de la présente invention est d'améliorer l'écartement d'une tresse d'un câble électrique, ceci pour faciliter l'association d'un tel câble électrique à une fiche de connexion ou à une prise de connexion.

La présente invention se veut de remédier aux inconvénients des dispositifs de pré-écartement ainsi que des systèmes d'écartement d'une tresse d'un câble électrique de l'état de la technique.

A cet effet, l'invention concerne un dispositif de pré-écartement d'une tresse que comporte un câble électrique, ce dispositif de pré-écartement comporte, d'une part, un châssis, d'autre part, des moyens d'appui qui sont configurés pour prendre appui contre la tresse du câble électrique, d'autre part encore, des moyens de montage en déplacement qui sont configurés pour monter les moyens d'appui en déplacement par rapport au châssis, ceci entre une position inactive et une position active d'appui de ces moyens d'appui contre la tresse du câble électrique et, d'autre part aussi, des moyens de montage en rotation qui sont configurés pour monter les moyens d'appui en rotation autour d'un axe de rotation et par rapport au châssis.

Selon une autre caractéristique, ce dispositif de pré-écartement comporte une pince qui comporte au moins deux mors dont l'un au moins comporte au moins une partie desdits moyens d'appui.

Encore une autre caractéristique concerne le fait que les moyens de montage en déplacement comportent des moyens de montage en translation selon un axe de translation des moyens d'appui, ceci par rapport au châssis et/ou par rapport aux moyens de montage en rotation et/ou selon une direction perpendiculaire à l'axe de rotation autour duquel les moyens d'appui sont montés en rotation.

L'invention concerne, également, un procédé de pré-écartement d'une tresse que comporte un câble électrique, ce procédé consiste en ce que, d'une part, on prend appui contre la tresse du câble électrique par l'intermédiaire de moyens d'appui, et, d'autre part et tout en maintenant ces moyens d'appui en appui contre la tresse, on assure au moins une rotation des moyens d'appui autour de la tresse, ceci selon au moins un sens de rotation.

L'invention concerne, aussi, un système d'écartement d'une tresse que comporte un câble électrique, ce système d'écartement comporte, d'une part, un châssis, d'autre part, un tube creux destiné à recevoir intérieurement une partie, que comporte le câble électrique, et qui est entourée par ladite tresse, d'autre part encore, une pièce, qui comporte un logement à l'intérieur duquel est logée une partie du tube creux, et qui présente une face d'appui destinée à venir en appui contre ladite tresse, d'autre part aussi, des moyens de montage en translation, selon un axe de translation, de la pièce par rapport au tube creux, ceci entre une position déployée d'au moins une partie du tube creux hors du logement et une position rétractée d'au moins une partie du tube creux à l'intérieur du logement et, d'autre part également, des moyens de montage en rotation, autour d'un axe de rotation, du tube creux et/ou de la pièce, ceci par rapport au châssis.

L'invention concerne, encore, un procédé d'écartement d'une tresse que comporte un câble électrique, ce procédé consiste en ce que, d'une part, on introduit une partie du câble électrique entourée par la tresse à l'intérieur d'un tube creux, d'autre part, on translate une pièce qui comporte un logement à l'intérieur duquel est logée au moins une partie du tube creux, ceci par rapport au tube creux et au câble électrique, d'autre part encore, on assure une prise d'appui d'une face d'appui que comporte ladite pièce contre la tresse et, d'autre part aussi, on assure une rotation du tube creux et/ou de la pièce par rapport au câble électrique.

L'invention concerne, aussi, une installation d'écartement d'une tresse que comporte un câble électrique, cette installation comporte, d'une part, un dispositif de pré-écartement d'une telle tresse et, d'autre part, un système d'écartement d'une telle tresse, caractérisée par le fait que, d'une part, le dispositif de pré-écartement présente les caractéristiques décrites ci-dessus et, d'autre part, le système d'écartement présente les caractéristiques décrites ci-dessus.

Finalement, l'invention concerne un procédé d'écartement d'une tresse que comporte un câble électrique, ce procédé consiste en ce que, d'une part, on pré-écarte la tresse du câble électrique conformément au procédé de pré-écartement décrit ci-dessus et, d'autre part, on écarte la tresse du câble conformément au procédé d'écartement décrit ci-dessus.

Ainsi, l'invention concerne un dispositif de pré-écartement d'une tresse d'un câble électrique. Ce dispositif comporte des moyens d'appui ainsi que des moyens de montage en rotation de ces moyens d'appui. Ces moyens de montage en rotation permettent, avantageusement et lorsque les moyens d'appui sont en appui contre la tresse, de démêler les brins de la tresse et, ainsi, de faciliter et de rendre plus efficace le pré-écartement de cette tresse.

Ce dispositif de pré-écartement comporte des moyens de montage en déplacement des moyens d'appui entre une position inactive et une position active d'appui. Ces moyens de montage en déplacement comportent des moyens de montage en translation desdits moyens d'appui. Ces moyens de montage en translation présentent, avantageusement, une conception simplifiée, une efficacité améliorée, et un coût de revient réduit par rapport à un diaphragme de l'état de la technique.

L'invention concerne, aussi, un système d'écartement de la tresse d'un câble électrique. Ce système d'écartement comporte, d'une part, un tube creux à l'intérieur duquel est positionnée une partie du câble électrique et à l'extérieur duquel est positionnée la tresse de ce câble, d'autre part, une pièce à l'intérieur de laquelle est positionnée une partie du tube creux et, d'autre part encore, des moyens de montage en rotation du tube creux et/ou de la pièce par rapport à un châssis et, donc, par rapport au câble électrique. Ces moyens de montage en rotation présentent, avantageusement, une conception simplifiée et une efficacité améliorée par rapport à des moyens pour souffler de l'air de l'état de la technique. La présence de ces moyens de montage en rotation permet, également et avantageusement, de maintenir le feuillard en applique contre l'âme du câble électrique, d'éviter à ce feuillard de décoller par rapport à cette âme et de se plaquer contre la tresse et, ainsi, d'améliorer l'écartement de cette tresse.

Finalement, l'invention concerne une installation d'écartement d'une tresse d'un câble électrique qui comporte, d'une part, ledit dispositif de pré-écartement susmentionné de cette tresse, d'autre part, ledit système d'écartement susmentionné de cette tresse, d'autre part encore, des moyens de positionnement du câble électrique par rapport à ce dispositif de pré-écartement et par rapport à ce système d'écartement et, d'autre part aussi, des moyens de montage en déplacement des moyens de positionnement, ceci entre une position de pré-écartement par rapport à ce dispositif de pré-écartement et une position d'écartement par rapport au système d'écartement. La présence de ces moyens de positionnement permet, avantageusement, de positionner les moyens de positionnement (et, par conséquent, le câble dont il convient de pré-écarter et d'écarter la tresse) de manière simple, rapide, efficace et précise par rapport au dispositif de pré-écartement ainsi que par rapport au système d'écartement.

D'autres caractéristiques et avantages de l'invention ressortiront de la description détaillée qui va suivre d'un mode de réalisation non limitatif de l'invention, en référence aux figures annexées dans lesquelles :
[Fig 1] représente une vue schématisée et en perspective d'un dispositif de pré-écartement d'une tresse d'un câble électrique conforme à l'invention.
[Fig 2] représente une vue schématisée, en perspective et en détail d'un câble électrique et du dispositif de pré-écartement illustré figure 1, ceci dans une première position inactive d'appui des moyens d'appui contre la tresse du câble électrique.
[Fig 3] représente une vue similaire à la figure 2, ceci dans une première position active d'appui des moyens d'appui contre la tresse du câble électrique.
[Fig 4] représente une vue similaire aux figures 2 et 3, ceci dans une deuxième position inactive d'appui des moyens d'appui contre la tresse du câble électrique.
[Fig 5] représente une vue similaire aux figures 2 à 4, ceci dans une deuxième position active d'appui des moyens d'appui contre la tresse du câble électrique.
[Fig 6] représente une vue schématisée, en perspective et en détail d'un câble électrique et du système d'écartement d'une tresse d'un tel câble électrique conforme à l'invention, ceci dans une position inactive de coopération du câble électrique avec ce système d'écartement.
[Fig 7] représente une vue similaire à la figure 6, ceci dans une position active de coopération du câble électrique et de la tresse de ce câble électrique avec le tube creux du système d'écartement.
[Fig 8] représente une vue similaire aux figures 6 et 7, ceci dans une position de coopération de la tresse du câble électrique avec la pièce du système d'écartement.

En référence notamment aux figures susmentionnées, la présente invention concerne le domaine de l'outillage permettant de réaliser la préparation des câbles électriques, plus particulièrement des câbles électriques coaxiaux, en vue de leur association à une fiche de connexion ou à une prise de connexion.

Un tel câble électrique A comporte, d'une part, un fil électrique B qui est réalisé en un matériau conducteur électrique, d'autre part, une âme C, qui est réalisée en un matériau diélectrique ou isolant, et qui entoure le fil électrique, d'autre part encore, une tresse D, qui entoure l'âme C, qui est réalisée en un matériau conducteur électrique, et qui est constituée par des brins tressés et, d'autre part aussi, une gaine E, qui est réalisée en un matériau isolant, et qui entoure la tresse D. Un tel câble électrique A peut, encore, comporter un feuillard (usuellement connu sous la dénomination anglosaxonne de « foil »), qui est interposé entre l'âme C et la tresse D, qui entoure ladite âme C, et qui est réalisé en un matériau métallique (notamment en cuivre ou en aluminium).

Afin de réaliser la préparation d'un tel câble électrique A, il convient, dans un premier temps, de pré-écarter la tresse D d'un tel câble électrique A, ceci par rapport à l'âme C de ce câble électrique A et, dans un deuxième temps et après avoir pré-écarté cette tresse D, d'écarter cette tresse D du câble électrique A, là encore par rapport à l'âme C de ce câble électrique A.

L'invention concerne, alors, un dispositif de pré-écartement 1 de la tresse D que comporte le câble électrique A, ceci par rapport à l'âme C de ce câble électrique A.

Ce dispositif de pré-écartement 1 comporte un châssis 2 qui est configuré pour venir reposer (voire, et de préférence, pour être fixé) sur un support (non représenté), notamment constitué par une table ou analogue.

Ce dispositif de pré-écartement 1 comporte, également, des moyens d'appui 3 qui sont configurés pour prendre appui contre la tresse D du câble électrique A, ceci en vue du pré-écartement de cette tresse D par rapport à l'âme C de ce câble électrique A.

De tels moyens d'appui 3 peuvent comporter au moins une roulette (30 ; 30 ') qui est, chacune, mobile en rotation autour d'un axe de rotation.

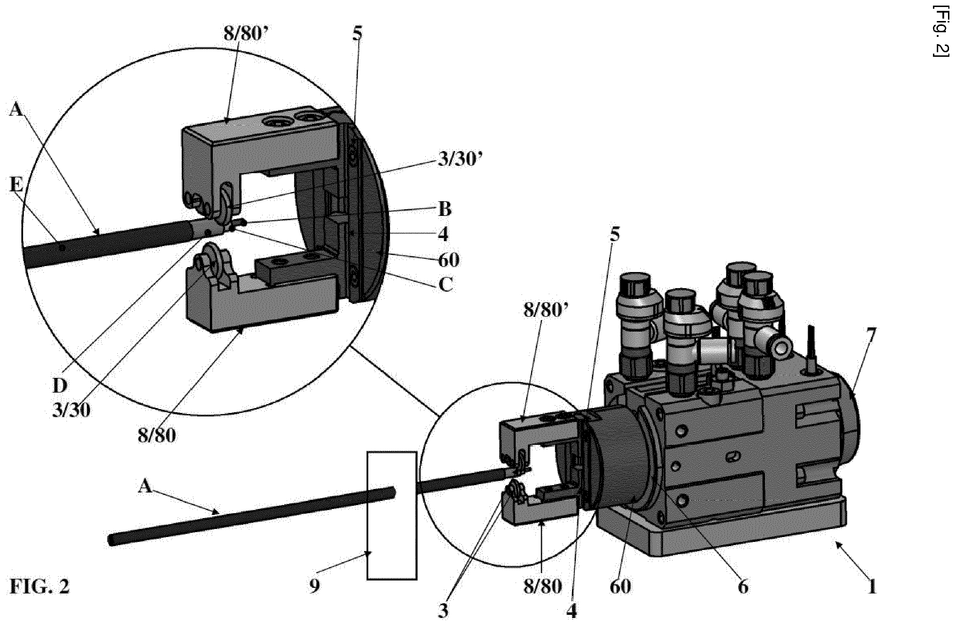

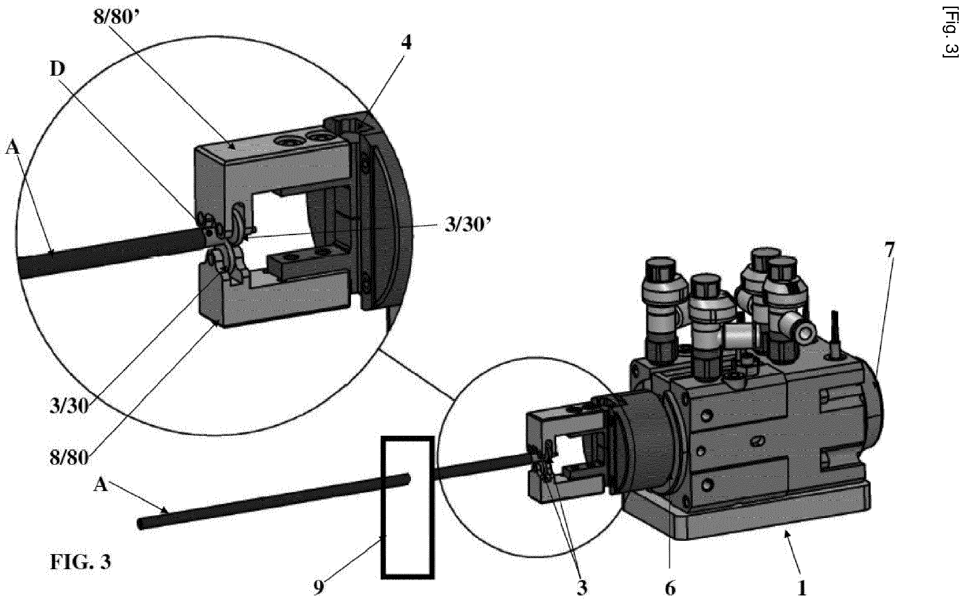

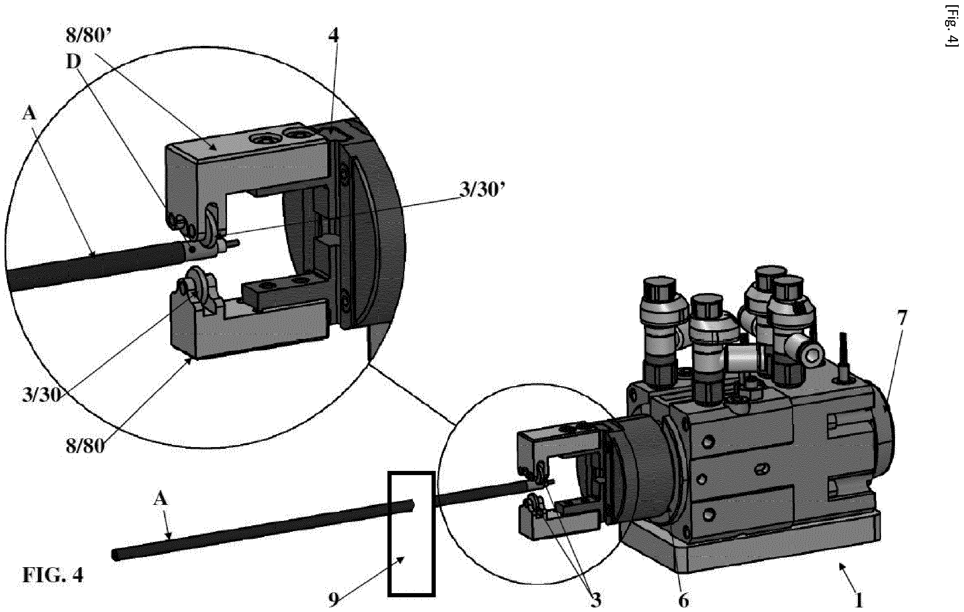

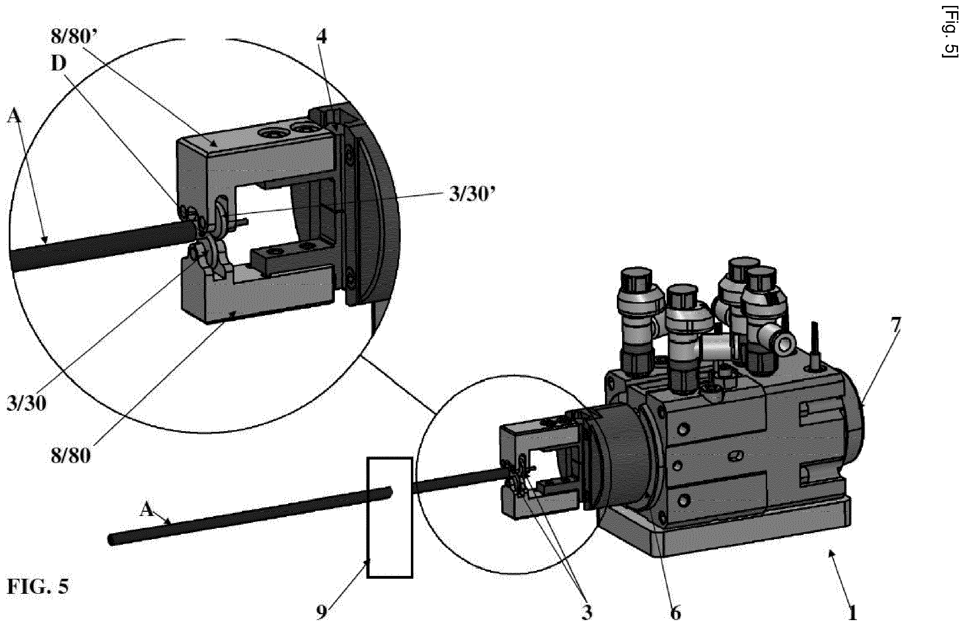

Ce dispositif de pré-écartement 1 comporte, aussi, des moyens de montage en déplacement 4 qui sont configurés pour monter les moyens d'appui 3 en déplacement par rapport au châssis 2 (et, alors également, par rapport au câble électrique A), ceci entre une position inactive (figures 2 et 4) et une position active (figures 3 et 5) d'appui de ces moyens d'appui 3 contre la tresse D du câble électrique A.

De tels moyens de montage en déplacement 4 peuvent être constitués par des moyens de montage en pivotement desdits moyens d'appui 3, ceci autour d'un axe de pivotement et/ou par rapport au châssis 2 (solution non représentée) et/ou par rapport à des moyens de montage en rotation 6 (tels qu'ils seront décrits ci-dessous).

A ce propos, on observera que cet axe de pivotement est de préférence perpendiculaire à un axe selon lequel s'étend le câble électrique A dont il convient de pré-écarter la tresse D.

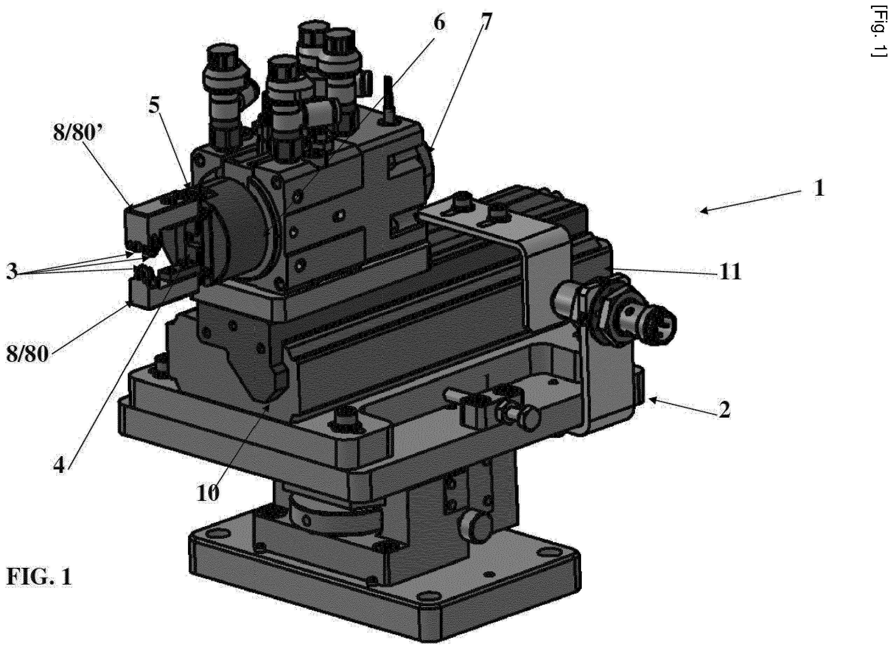

Cependant et selon un mode de réalisation préféré illustré sur les figures 1 à 5, ces moyens de montage en déplacement 4 comportent des moyens de montage en translation selon un axe de translation des moyens d'appui 3, ceci par rapport au châssis 2 et/ou par rapport à des moyens de montage en rotation 6 (tels qu'ils seront décrits ci-dessous), notamment par rapport à (voire, et de préférence, sur) une platine 60 que comportent de tels moyens de montage en rotation 6 (tel qu'il sera décrit plus en détail ci-dessous).

A ce propos, on observera que cet axe de translation est de préférence perpendiculaire à l'axe selon lequel s'étend le câble électrique A dont il convient de pré-écarter la tresse D.

Le dispositif de pré-écartement 1 comporte, alors, également, des moyens d'entraînement en déplacement 5, qui sont associés aux moyens de montage en déplacement 4, et qui sont configurés pour entraîner en déplacement (plus particulièrement en pivotement ou, et de préférence, en translation) les moyens d'appui 3, ceci par rapport au châssis 2 et/ou par rapport aux moyens de montage en rotation 6 décrits ci-dessous (notamment sur ces moyens de montage en rotation 6, plus particulièrement par rapport à la platine 60 susmentionnée, notamment sur cette platine 60) et/ou entre la position inactive et la position active d'appui de ces moyens d'appui 3 contre la tresse D. Ces moyens d'entraînement en déplacement 5 peuvent être motorisés et/ou comporter un moteur.

Encore une autre caractéristique concerne le fait que le dispositif de pré-écartement 1 comporte, également, des moyens de montage en rotation 6 qui sont configurés pour monter les moyens d'appui 3 en rotation autour d'un axe de rotation et par rapport au châssis 2, plus particulièrement sur ce châssis 2.

A ce propos, on observera que cet axe de rotation est au moins parallèle à (voire et de préférence confondu avec) l'axe selon lequel s'étend le câble électrique A dont il convient de pré-écarter la tresse D.

On observera que ces moyens de montage en rotation 6 comportent ladite platine 60 susmentionnée, d'une part, sur laquelle les moyens d'appui 3 sont montés en déplacement (plus particulièrement en translation) et, d'autre part, qui est mobile en rotation (plus particulièrement autour de l'axe de rotation susmentionné) par rapport au châssis 2, notamment montée mobile en rotation sur ce châssis 2.

Tel que mentionné ci-dessus, les moyens d'appui 3 comportent au moins une roulette (30 ; 30') qui est, chacune, mobile en rotation autour d'un axe de rotation. Un tel axe de rotation est, alors, plus particulièrement, parallèle à l'axe de rotation autour duquel les moyens d'appui 3 sont montés en rotation.

Egalement tel que mentionné ci-dessus, les moyens de montage en déplacement 4 comportent des moyens de montage en translation selon un axe de translation des moyens d'appui 3 par rapport au châssis 2. A ce propos, on observera que, de manière alternative ou (et de préférence) additionnelle, ces moyens de montage en translation peuvent, alors, être des moyens de montage en translation de ces moyens d'appui 3, ceci par rapport aux moyens de montage en rotation 6 des moyens d'appui 3 (plus particulièrement sur ces moyens de montage en rotation 6 de ces moyens d'appui 3, notamment par rapport à ladite platine 60 que comportent ces moyens de montage en rotation 4, plus particulièrement sur cette platine 60 comme susmentionné) et/ou selon une direction perpendiculaire à l'axe de rotation autour duquel les moyens d'appui 3 sont montés en rotation.

Le dispositif de pré-écartement 1 comporte, alors, également, des moyens d'entraînement en rotation 7, qui sont associés aux moyens de montage en rotation 6, et qui sont configurés pour entraîner en rotation les moyens d'appui 3 (plus particulièrement la platine 60 sur laquelle sont montés en déplacement les moyens d'appui 3, plus particulièrement par l'intermédiaire des moyens de montage en déplacement 4), ceci par rapport au châssis 2. Ces moyens d'entraînement en rotation 7 peuvent être motorisés et/ou comporter un moteur.

Selon une autre caractéristique du dispositif de pré-écartement 1, celui-ci 1 comporte une pince 8 qui comporte au moins deux mors (80 ; 80') dont l'un au moins comporte au moins une partie desdits moyens d'appui 3, voire (et de préférence) dont les deux comportent chacun au moins une partie desdits moyens d'appui 3. Une telle pince 8 peut être une pince dite rotative.

A ce propos, on observera que, d'une part, l'un 80 desdits mors (80 ; 80') peut alors comporter au moins une roulette 30 telle que décrite ci-dessus et, d'autre part, l'autre 80' desdits mors (80 ; 80') peut comporter au moins une roulette 30' (voire, et de préférence, deux roulettes 30' comme illustré dans les figures en annexe) telle que décrite ci-dessus.

Aussi et selon une autre caractéristique de l'invention, les moyens de montage en rotation 6 (des moyens d'appui 3) susmentionnés peuvent, alors, comporter (voire être constitués par) des moyens de montage en rotation de ladite pince 8 (plus particulièrement de l'un au moins des mors 80 ; 80' de cette pince 8) par rapport au châssis 2, plus particulièrement sur ce châssis 2.

De plus, lesdits moyens de montage en déplacement 4 des moyens d'appui 3 peuvent, alors, comporter (voire être constitués par) des moyens de montage en déplacement (plus particulièrement en translation selon un axe de translation tel que décrit ci-dessus) d'au moins l'un desdits mors (80 ; 80') de la pince 8 par rapport aux moyens de montage en rotation 6 (plus particulièrement sur ces moyens de montage en rotation 6, notamment par rapport, voire sur ladite platine 60), ceci entre une position inactive (figures 2 et 4) et une position active (figures 3 et 5) d'appui d'un tel mors (80 ; 80') contre la tresse T du câble électrique C.

Encore une autre caractéristique de l'invention concerne le fait que le dispositif de pré-écartement 1 comporte des moyens de positionnement 9, qui s'étendent selon un axe de positionnement qui est au moins parallèle à (voire et de préférence confondu avec) l'axe de rotation autour duquel les moyens d'appui 3 sont montés en rotation, et qui sont configurés pour positionner ledit câble électrique A en sorte qu'il s'étende selon ledit axe de positionnement.

Encore une autre caractéristique de ce dispositif de pré-écartement 1 concerne le fait qu'il comporte, encore, des moyens de montage en translation 10 qui sont configurés pour monter en translation selon l'axe de positionnement et/ou selon l'axe de rotation, soit les moyens de positionnement 9 par rapport auxdits moyens d'appui 3 (plus particulièrement par rapport à au moins l'un des deux mors 80 ; 80' de la pince 8), soit (et de préférence) lesdits moyens d'appui 3 (plus particulièrement l'un au moins des deux mors 80 ; 80' de la pince 8) par rapport aux moyens de positionnement 9.

A ce propos, on observera que ces moyens de montage en translation 10 sont, plus particulièrement, configurés pour monter les moyens d'appui 3 (voire les moyens de montage en déplacement 4 et/ou les moyens de montage en rotation 6) en translation par rapport à au moins une partie du châssis 2 (plus particulièrement une partie du châssis 2 qui est montée, voire fixée, sur ledit support). De manière particulière, ces moyens de montage en translation 10 peuvent être configurés pour monter une partie du châssis 2 (sur laquelle sont montés les moyens d'appui 3, notamment par l'intermédiaire des moyens de montage en déplacement 4 et/ou des moyens de montage en rotation 6) sur une autre partie dudit châssis 2 (plus particulièrement ladite partie du châssis 2 qui est montée, voire fixée, sur ledit support).

De tels moyens de montage en translation 10 permettent, avantageusement, de déplacer les moyens d'appui 3 (plus particulièrement la pince 8 qui comporte ces moyens d'appui 3) longitudinalement par rapport au câble électrique A (plus particulièrement par rapport à la tresse D de ce câble électrique A), ceci pour prendre appui contre ladite tresse D en différents points de cette tresse D. Il en découle une amélioration du pré-écartement de cette tresse D.

Le dispositif de pré-écartement 1 comporte, alors, également, des moyens d'entraînement en translation 11, qui sont associés aux moyens de montage en translation 10, et qui sont configurés pour entraîner en translation les moyens de positionnement 9 (par rapport aux moyens d'appui 3) ou (et de préférence) les moyens d'appui 3 (par rapport aux moyens de positionnement 9). En fait, ces moyens d'entraînement en translation 11 sont, de préférence, configurés pour entraîner en translation au moins une partie du châssis 2 (plus particulièrement une partie du châssis 2 sur laquelle sont montés les moyens d'appui 3, notamment par l'intermédiaire des moyens de montage en déplacement 4 et/ou des moyens de montage en rotation 6) par rapport à une autre partie dudit châssis 2 (qui est montée, voire fixée, sur ledit support). Ces moyens d'entraînement en translation 11 peuvent être motorisés et/ou comporter un moteur.

En fait, c'est, plus particulièrement le châssis 2 qui comporte au moins une partie desdits moyens de montage en rotation 6 et/ou au moins une partie desdits moyens d'entraînement en rotation 7 et/ou au moins une partie desdits moyens de montage en translation 10 et/ou au moins une partie desdits moyens d'entraînement en translation 11.

L'invention concerne, également, un procédé de pré-écartement d'une tresse D que comporte un câble électrique A (qui présente les caractéristiques décrites ci-dessus).

Ce procédé peut, en particulier et de manière avantageuse (mais cependant non exclusive), être mis en œuvre par l'intermédiaire du dispositif de pré-écartement 1 décrit ci-dessus.

Ce procédé consiste en ce que, d'une part, on prend appui contre la tresse D du câble électrique A par l'intermédiaire de moyens d'appui 3, et, d'autre part et tout en maintenant ces moyens d'appui 3 en appui contre la tresse D, on assure au moins une rotation des moyens d'appui 3 autour de la tresse D, ceci selon au moins un sens de rotation, notamment selon un unique sens de rotation.

Un tel sens de rotation est, de préférence, opposé au sens de tressage des brins de la tresse D du câble électrique A. Ceci permet, avantageusement, de démêler les brins de cette tresse D de manière appropriée.

Selon une autre caractéristique, on assure une telle rotation selon un angle compris entre 90° et 270°, plus particulièrement de l'ordre de 180°.

De manière additionnelle, le procédé peut, encore, consister en ce qu'on assure au moins une autre rotation des moyens d'appui 3 autour de la tresse D, ceci selon un sens contraire de rotation (à savoir dans le sens de tressage des brins de la tresse D) et tout en maintenant les moyens d'appui 3 en appui contre la tresse D.

En fait, dans ce procédé, on prend appui contre la tresse D par l'intermédiaire des moyens d'appui 3 (qui présentent les caractéristiques décrites ci-dessus), plus particulièrement associés à des moyens de montage en déplacement 4 tels que décrits ci-dessus et sous l'effet des moyens d'entraînement en déplacement 5 tels que décrits ci-dessus.

Le procédé consiste, également et successivement, après avoir assuré ladite au moins une rotation (des moyens d'appui 3 autour de la tresse D) selon au moins un sens de rotation, en ce qu'on interrompt l'appui des moyens d'appui 3 contre la tresse D, en ce qu'on déplace les moyens d'appui 3 de manière longitudinale par rapport à la tresse D, en ce qu'on prend appui contre la tresse D par l'intermédiaire des moyens d'appui 3 et, d'une part (et tout en prenant appui contre la tresse D), en ce qu'on assure au moins une rotation des moyens d'appui 3 autour de la tresse D, ceci selon au moins un sens de rotation, notamment selon un unique sens de rotation.

Un tel sens de rotation est, là encore et de préférence, opposé au sens de tressage des brins de la tresse D du câble électrique A.

Selon une autre caractéristique, on assure, là encore, une telle rotation selon un angle compris entre 90° et 270°, plus particulièrement de l'ordre de 180°.

De manière additionnelle, le procédé peut, encore, consister en ce qu'on assure au moins une autre rotation des moyens d'appui 3 autour de de la tresse D, ceci selon au moins un sens contraire (à savoir dans le sens de tressage des brins de la tresse D) et tout en maintenant les moyens d'appui 3 en appui contre la tresse D.

Dans ce procédé, on assure au moins une rotation des moyens d'appui 3 (qui présentent les caractéristiques décrites ci-dessus et/ou que comporte ladite pince 8 décrite ci-dessus), plus particulièrement associés à des moyens de montage en rotation 6 tels que décrits ci-dessus et/ou sous l'effet des moyens d'entraînement en rotation 7 tels que décrits ci-dessus.

L'invention concerne, encore, un système d'écartement 13 d'une tresse D que comporte un câble électrique A (notamment qui présente les caractéristiques décrites ci-dessus).

Ce système d'écartement 13 d'une telle tresse D est configuré pour écarter la tresse D d'un câble électrique A (notamment qui présente les caractéristiques décrites ci-dessus), plus particulièrement configuré pour écarter la tresse D pré-écartée d'un tel câble électrique A, notamment une tresse D qui a été pré-écartée par l'intermédiaire d'un dispositif de pré-écartement 1 tel que décrit ci-dessus et/ou en mettant en œuvre le procédé de pré-écartement décrit ci-dessus.

Ce système d'écartement 13 comporte un châssis 14 qui est configuré pour venir reposer (voire, et de préférence, pour être fixé) sur un support (non représenté), notamment constitué par une table ou analogue.

Ce système d'écartement 13 comporte, aussi, un tube creux 15 destiné à recevoir intérieurement une partie (plus particulièrement le fil électrique B, l'âme C qui entoure le fil électrique B, voire le feuillard qui entoure l'âme C), que comporte le câble électrique A, et qui est entourée par ladite tresse D. Ce tube creux 15 s'étend selon un axe d'extension.

Ce système d'écartement comporte, encore, une pièce 16 qui comporte un logement 160 à l'intérieur duquel est logée une partie du tube creux 15. Ce logement 160 s'étend selon l'axe d'extension selon lequel s'étend ce tube creux 15.

Cette pièce 16 présente une face d'appui 161 destinée à venir en appui contre ladite tresse D. Cette face d'appui 161 s'étend de manière perpendiculaire par rapport à l'axe d'extension selon lequel s'étend le tube creux 15.

Cette pièce 16 comporte un bloc qui adopte une forme de parallélépipède rectangle ou de cube.

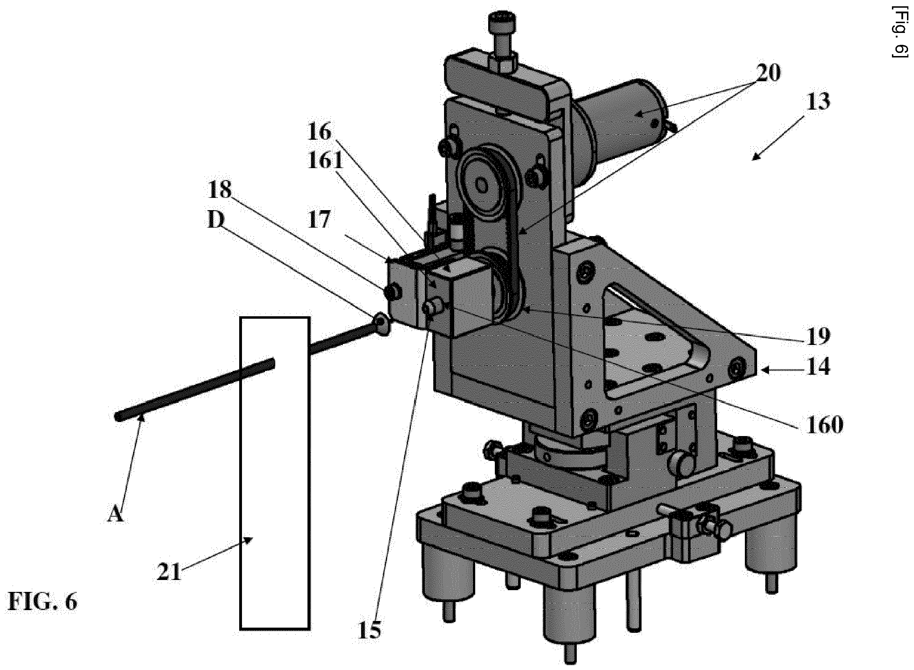

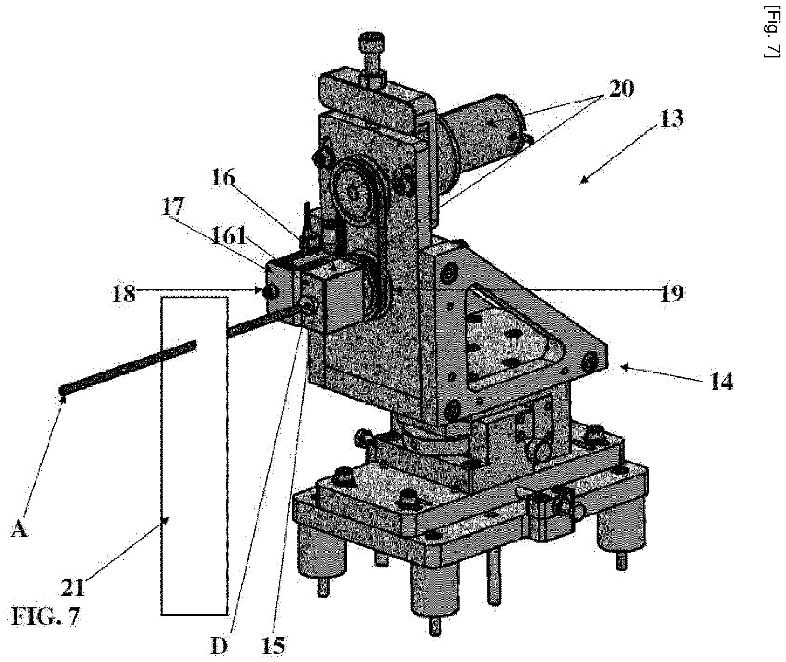

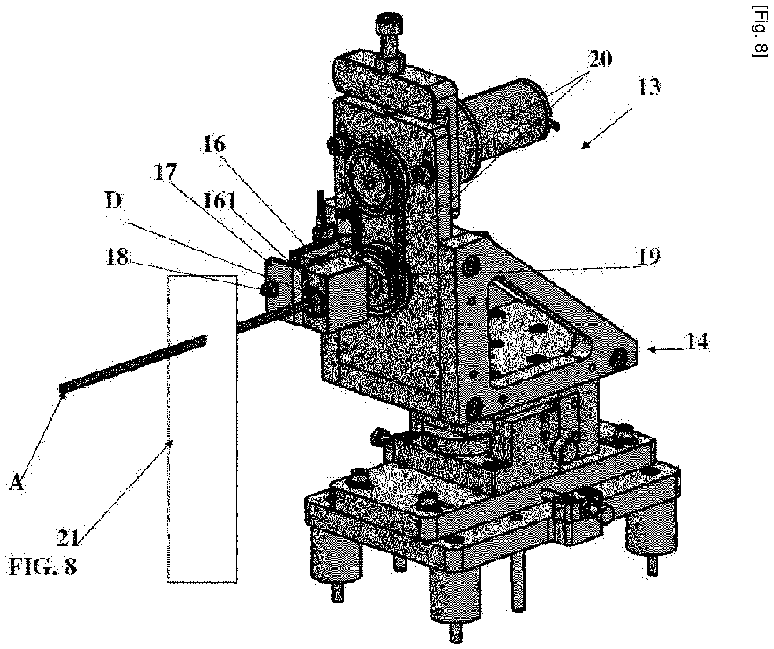

Ce système d'écartement 13 comporte, aussi, des moyens de montage en translation 17, selon un axe de translation, de la pièce 16 par rapport au tube creux 15, ceci entre une position déployée d'au moins une partie du tube creux 15 hors du logement 160 (figure 6 et 7) et une position rétractée d'au moins une partie (voire, et de préférence, de l'intégralité) du tube creux 15 à l'intérieur du logement 160 (figure 8).

Ces moyens de montage en translation 17 permettent, avantageusement, lorsque la partie du câble électrique A est reçu par le tube creux 15 et sous l'effet de la translation (selon l'axe de translation) de la pièce 16 par rapport à ce tube creux 15, d'assurer une prise d'appui de la tresse D du câble électrique A contre la face d'appui 161 et, ainsi, un écartement de ladite tresse D, notamment par rapport à l'âme B dudit câble électrique A.

En fait, ces moyens de montage en translation 17 comportent, plus particulièrement, des moyens de montage en translation de la pièce 16 par rapport au châssis 14, plus particulièrement sur ce châssis 14, ceci selon ledit axe de translation.

On observera que ledit axe de translation est au moins parallèle à (voire, et de préférence, confondu avec) l'axe d'extension selon lequel s'étend le tube creux 15.

Ce système d'écartement 13 comporte, alors, également, des moyens d'entraînement en translation 18 de la pièce 16 par rapport au tube creux 15, ceci selon ledit axe de translation.

En fait, ces moyens d'entraînement en translation 18 sont, plus particulièrement, configurés pour assurer un entraînement en translation de cette pièce 16 par rapport au châssis 14, ceci selon ledit axe de translation. Ces moyens d'entraînement en translation 18 peuvent être de type pneumatique, hydraulique ou électrique (et, alors, être motorisés et/ou comporter un moteur). Un mode particulier de réalisation consiste en ce que ces moyens d'entraînement en translation 18 comportent un vérin, notamment pneumatique.

Ce système d'écartement 13 comporte, également, des moyens de montage en rotation 19, autour d'un axe de rotation, du tube creux 15 et/ou de la pièce 16, ceci par rapport au châssis 14.

De tels moyens de montage en rotation 19 permettent, avantageusement, de plaquer le feuillard du câble électrique A (ou de maintenir ce feuillard plaqué) contre l'âme C de ce câble électrique A et/ou d'améliorer l'écartement de ladite tresse D, notamment par rapport à l'âme B du câble électrique A.

Selon un mode de réalisation particulier, ces moyens de montage en rotation 18 sont, plus particulièrement, configurés pour assurer un montage en rotation (autour dudit axe de rotation) dudit tube creux 15 par rapport au châssis 14 (voire également par rapport à ladite pièce 16), plus particulièrement sur ce châssis 14.

On observera que ledit axe de rotation est au moins parallèle à (voire, et de préférence, confondu avec) l'axe d'extension selon lequel s'étend le tube creux 15.

Le système d'écartement 13 comporte, aussi, des moyens d'entraînement en rotation 20 (autour dudit axe de rotation) du tube creux 15 et/ou de la pièce 16, ceci par rapport au châssis 14.

En fait, ces moyens d'entraînement en rotation 20 sont, plus particulièrement configurés pour entraîner en rotation (autour de l'axe de rotation) ledit tube creux 15, ceci par rapport au châssis 14 (voire également par rapport à ladite pièce 16).

Ces moyens d'entraînement en rotation 20 peuvent être motorisés et/ou comporter un moteur. Un mode particulier de réalisation consiste en ce que ces moyens d'entraînement en rotation 20 comportent un moteur, voire encore un moyen de transmission (sous forme d'une courroie ou analogue) d'un mouvement de rotation entre ledit moteur et le tube 15.

Finalement, ledit système d'écartement 13 comporte des moyens de positionnement 21, qui s'étendent selon un axe de positionnement qui est au moins parallèle à l'axe de rotation (du tube creux 15 et/ou de la pièce 16) et/ou à l'axe de translation (de la pièce 16 par rapport au tube creux 15), et qui sont configurés pour positionner ledit câble électrique A en sorte qu'il s'étende selon ledit axe de positionnement.

On observera que lesdits moyens de positionnement 21 (que comporte le système d'écartement 13) peuvent avantageusement être constitués par les moyens de positionnement 9 que comporte le dispositif de pré-écartement 1.

L'invention concerne, aussi, un procédé d'écartement d'une tresse D que comporte un câble électrique A.

Ce procédé peut, en particulier et de manière avantageuse (mais cependant non exclusive), être mis en œuvre par l'intermédiaire du système d'écartement 13 décrit ci-dessus.

Ce procédé d'écartement consiste en ce que, d'une part, on introduit une partie (plus particulièrement le fil électrique B, l'âme C qui entoure le fil électrique B, voire encore le feuillard qui entoure l'âme C), que comporte le câble électrique A, et qui est entourée par la tresse D (qu'il convient d'écarter) à l'intérieur d'un tube creux 15, plus particulièrement que comporte le système d'écartement 13 décrit ci-dessus et qui présente les caractéristiques décrites ci-dessus.

En fait, on introduit ladite partie du câble électrique A à l'intérieur du tube creux 15 jusqu'à ce que ce câble électrique A (plus particulièrement la gaine E et/ou la tresse D de ce câble électrique A) prenne appui contre ce tube creux 15.

D'autre part, ce procédé consiste en ce qu'on translate une pièce 16 (plus particulièrement que comporte le système d'écartement 13 décrit ci-dessus et qui présente les caractéristiques décrites ci-dessus) qui comporte un logement 160 à l'intérieur duquel est logée (de manière mobile en translation) au moins une partie du tube creux 15, ceci par rapport au tube creux 15 et au câble électrique A (qui est, plus particulièrement, en appui contre le tube creux 15).

A ce propos, on observera qu'on translate la pièce 16 par rapport au tube creux 15, ceci selon un axe de translation qui est au moins parallèle à (voire, et de préférence, confondu avec) un axe d'extension selon lequel s'étend ce tube creux 15.

D'autre part encore, ce procédé consiste en ce qu'on assure une prise d'appui d'une face d'appui 161 que comporte ladite pièce 16 (plus particulièrement que comporte le système d'écartement 13 décrit ci-dessus et qui présente les caractéristiques décrites ci-dessus) contre la tresse D.

A ce propos, on observera qu'une telle prise d'appui est au moins en partie assurée par la translation de la pièce 16 par rapport au tube creux 15. Cette prise d'appui permet, alors, d'écarter la tresse D par rapport à l'âme C du câble électrique A.

Le procédé consiste, d'autre part encore, en ce qu'on assure une rotation du tube creux 15 et/ou de la pièce 16 par rapport au câble électrique A.

En fait, on assure une telle rotation autour d'un axe de rotation qui est au moins parallèle à l'axe d'extension selon lequel s'étend le tube creux 15.

Une telle rotation permet, avantageusement et tel que susmentionné, de plaquer le feuillard du câble électrique A (ou de maintenir ce feuillard plaqué) contre l'âme C de ce câble électrique A et/ou d'améliorer l'écartement de ladite tresse D, notamment par rapport à l'âme B du câble électrique A.

On observera qu'on peut assurer une telle rotation, selon le cas, avant de translater la pièce 16 par rapport au tube creux 15, après avoir translaté la pièce 16 par rapport au tube creux 15, en même temps qu'on translate cette pièce 16 par rapport au tube creux 15 ou (et de préférence) avant, pendant et après une telle translation.

En fait, un mode préféré de réalisation consiste en ce qu'on assure uniquement une rotation du tube creux 15 par rapport à la pièce 16 et/ou par rapport au câble électrique A.

L'invention concerne, également, une installation d'écartement d'une tresse D que comporte un câble électrique A.

Cette installation comporte, d'une part, un dispositif de pré-écartement 1 d'une telle tresse D et, d'autre part, un système d'écartement 13 d'une telle tresse D (plus particulièrement d'une tresse D pré-écartée, notamment par l'intermédiaire du dispositif de pré-écartement 1).

En fait, selon l'invention, le dispositif de pré-écartement 1 présente les caractéristiques décrites ci-dessus et, d'autre part, le système d'écartement 13 présente les caractéristiques décrites ci-dessus.

De manière additionnelle, ladite installation d'écartement peut comporter des moyens de positionnement qui sont configurés pour positionner ledit câble A par rapport au dispositif de pré-écartement 1 susmentionné (plus particulièrement par rapport aux moyens d'appui 3 que comporte ce dispositif de pré-écartement 1) ainsi que par rapport au système d'écartement 13 susmentionné (plus particulièrement par rapport au tube creux 15 et/ou à la pièce 16 que comporte ce système d'écartement 13).

On observera que lesdits moyens de positionnement (que comporte cette installation) peuvent, avantageusement, être constitués par les moyens de positionnement 9 (que comporte le dispositif de pré-écartement 1 et qui présentent les caractéristiques décrites ci-dessus) et/ou par les moyens de positionnement 21 (que comporte le système d'écartement 13 et qui présentent les caractéristiques décrites ci-dessus).

Encore une autre caractéristique concerne le fait que l'installation comporte des moyens de montage en déplacement qui sont configurés pour monter les moyens de positionnement en déplacement, ceci entre, d'une part, une position de pré-écartement par rapport au dispositif de pré-écartement 1 dans laquelle le câble A est positionné par rapport au dispositif de pré-écartement 1 en vue du pré-écartement de la tresse D de ce câble A et, d'autre part, une position d'écartement par rapport au système d'écartement 13 dans laquelle le câble A est positionné par rapport au système d'écartement 13 en vue de l'écartement de la tresse D de ce câble A.

Une autre caractéristique de cette installation consiste en ce que, d'une part, les moyens de positionnement s'étendent selon un axe de positionnement et sont configurés pour positionner ledit câble A en sorte qu'il s'étende selon ledit axe de positionnement et, d'autre part, les moyens de montage en déplacement (des moyens de positionnement) sont, alors, configurés pour monter les moyens de positionnement, soit en translation selon un axe de translation perpendiculaire à l'axe de positionnement, soit en rotation autour d'un axe de rotation perpendiculaire ou parallèle à l'axe de positionnement.

Selon un mode de réalisation préféré, ledit axe de positionnement est horizontal tandis que, selon le cas, ledit axe de translation est horizontal ou vertical alors que ledit axe de rotation est vertical ou horizontal.

Ladite installation peut, alors, également, comporter des moyens d'entraînement en déplacement (plus particulièrement en translation ou en rotation) de ces moyens de positionnement. Ces moyens d'entraînement en déplacement peuvent être motorisés et/ou comporter un moteur.

Finalement, ladite installation peut comporter un support qui peut adopter, de préférence, la forme d'une table.

Un tel support comporte, d'une part, au moins une partie fixe sur laquelle sont montées (de préférence rapportées, notamment fixement) au moins une partie du dispositif de pré-écartement 1 (plus particulièrement le châssis 2 que comporte ce dispositif de pré-écartement 1) et au moins une partie du système d'écartement 13 (plus particulièrement le châssis 14 que comporte ce système d'écartement 13) et, d'autre part, une partie mobile, sur laquelle sont montés (de préférence rapportés, notamment fixement) les moyens de positionnement (que comporte le dispositif de pré-écartement 1, le système d'écartement 13 et/ou l'installation d'écartement), qui est mobile par rapport à ladite au moins une partie fixe, et plus particulièrement qui est mobile en déplacement par rapport à une partie du dispositif de pré-écartement 1 (plus particulièrement par rapport au châssis 2 que comporte ce dispositif de pré-écartement 1) ainsi que par rapport à une partie du système d'écartement 13 (plus particulièrement par rapport au châssis 14 que comporte ce système d'écartement 13).

A ce propos, on observera que cette partie mobile peut, alors, être mobile par rapport à ladite au moins une partie fixe, ceci en translation selon un axe, notamment horizontal ou vertical, un tel axe pouvant être perpendiculaire à l'axe de positionnement et/ou au moins parallèle à, voire confondu avec, l'axe de translation selon lequel les moyens de positionnement sont montés en déplacement par l'intermédiaire des moyens de montage en déplacement de ces moyens de positionnement (tel que décrit ci-dessus).

De manière alternative, cette partie mobile peut, aussi, être mobile par rapport à ladite au moins une partie fixe, ceci en rotation autour d'un axe, notamment vertical (respectivement horizontal), un tel axe pouvant être perpendiculaire (respectivement parallèle) à l'axe de positionnement et/ou au moins parallèle à, voire confondu avec, l'axe de rotation autour duquel les moyens de positionnement sont montés en déplacement par l'intermédiaire des moyens de montage en déplacement de ces moyens de positionnement (tel que décrit ci-dessus).

Le support (que comporte ladite installation d'écartement d'une tresse D) peut, alors, comporter ou être équipé avec au moins une partie des moyens de montage en déplacement, qui ont été décrits ci-dessus, et qui sont configurés pour monter en déplacement les moyens de positionnement.

L'invention concerne, alors, également, un procédé d'écartement d'une tresse D d'un câble électrique A (qui présente les caractéristiques décrites ci-dessus).

Ce procédé d'écartement consiste en ce que, d'une part, on pré-écarte la tresse D du câble électrique A conformément au procédé de pré-écartement décrit ci-dessus et, d'autre part, on écarte la tresse D (plus particulièrement la tresse D pré-écartée, notamment conformément au procédé de pré-écartement susmentionné) du câble électrique A conformément au procédé d'écartement décrit ci-dessus.

On observera que l'on pré-écarte la tresse D du câble électrique A, de préférence en mettant en œuvre un dispositif de pré-écartement 1 (plus particulièrement présentant les caractéristiques décrites ci-dessus). De manière alternative ou (et de préférence) additionnelle, on écarte la tresse D du câble électrique A, de préférence en mettant en œuvre un système d'écartement 13 (plus particulièrement présentant les caractéristiques décrites ci-dessus).

Ce procédé consiste, également et avant de pré-écarter la tresse D du câble électrique A, en ce qu'on positionne ledit câble électrique A au sein des moyens de positionnement (9, 21) que comporte ladite installation d'écartement.

Ce procédé peut, alors, encore, consister en ce qu'on déplace ledit câble électrique A (notamment par déplacement des moyens de positionnement, plus particulièrement par translation ou par rotation de ces moyens de positionnement, ceci tel que décrit ci-dessus) en sorte que ce câble électrique A (plus particulièrement la tresse D de ce câble électrique A) coopère avec le dispositif de pré-écartement 1, ceci en vue du pré-écartement de la tresse D de ce câble électrique A.

Ce procédé peut, également, consister en ce qu'après pré-écartement de ladite tresse D, on déplace ledit câble électrique A (là encore notamment par déplacement des moyens de positionnement, plus particulièrement par translation ou par rotation de ces moyens de positionnement, ceci tel que décrit ci-dessus) en sorte que ce câble électrique A (plus particulièrement la tresse D pré-écartée de ce câble électrique A) coopère avec le système d'écartement 13, ceci en vue de l'écartement de la tresse D de ce câble électrique A.

## Revendications

1. Dispositif de pré-écartement (1) d'une tresse (D) que comporte un câble électrique (A), ce dispositif de pré-écartement (1) comporte, d'une part, un châssis (2), d'autre part, des moyens d'appui (3) qui sont configurés pour prendre appui contre la tresse (D) du câble électrique (A), d'autre part encore, des moyens de montage en déplacement (4) qui sont configurés pour monter les moyens d'appui (3) en déplacement par rapport au châssis (2), ceci entre une position inactive et une position active d'appui de ces moyens d'appui (3) contre la tresse (D) du câble électrique (A) et, d'autre part aussi, des moyens de montage en rotation (6) qui sont configurés pour monter les moyens d'appui (3) en rotation autour d'un axe de rotation et par rapport au châssis (2).

2. Dispositif de pré-écartement (1) selon la revendication 1, **caractérisé par le fait qu'**il comporte une pince (8) qui comporte au moins deux mors (80 ; 80') dont l'un au moins comporte au moins une partie desdits moyens d'appui (3).

3. Dispositif de pré-écartement (1) selon la revendication 2, **caractérisé par le fait que** les moyens de montage en rotation (6) comportent des moyens de montage en rotation de la pince (8) par rapport au châssis (2).

4. Dispositif de pré-écartement (1) selon l'une quelconque des revendications précédentes, **caractérisé par le fait que** lesdits moyens d'appui (3) comportent au moins une roulette (30 ; 30') qui est, chacune, mobile en rotation autour d'un axe de rotation parallèle à l'axe de rotation autour duquel les moyens d'appui (3) sont montés en rotation.

5. Dispositif de pré-écartement (1) selon l'une quelconque des revendications précédentes, **caractérisé par le fait que** les moyens de montage en déplacement (4) comportent des moyens de montage en translation selon un axe de translation des moyens d'appui (3), ceci par rapport au châssis (2) et/ou par rapport aux moyens de montage en rotation (6) et/ou selon une direction perpendiculaire à l'axe de rotation autour duquel les moyens d'appui (3) sont montés en rotation.

6. Dispositif de pré-écartement (1) selon l'une quelconque des revendications précédentes, **caractérisé par le fait qu'**il comporte des moyens de positionnement (9), qui s'étendent selon un axe de positionnement qui est au moins parallèle à l'axe de rotation autour duquel les moyens d'appui (3) sont montés en rotation, et qui sont configurés pour positionner ledit câble électrique (A) en sorte qu'il s'étende selon ledit axe de positionnement.

7. Dispositif de pré-écartement (1) selon la revendication 6, **caractérisé par le fait qu'**il comporte des moyens de montage en translation (10) qui sont configurés pour monter en translation selon l'axe de positionnement et/ou selon l'axe de rotation, soit les moyens de positionnement (9) par rapport auxdits moyens d'appui (3), soit lesdits moyens d'appui (3) par rapport aux moyens de positionnement (9).

8. Procédé de pré-écartement d'une tresse (D) que comporte un câble électrique (A), ce procédé consiste en ce que, d'une part, on prend appui contre la tresse (D) du câble électrique (A) par l'intermédiaire de moyens d'appui (3), et, d'autre part et tout en maintenant ces moyens d'appui (3) en appui contre la tresse (D), on assure au moins une rotation des moyens d'appui (3) autour de la tresse (D), ceci selon au moins un sens de rotation.

9. Procédé de pré-écartement selon la revendication 8, **caractérisé par le fait que**, successivement et après avoir assuré ladite au moins une rotation selon au moins un sens de rotation, on interrompt l'appui des moyens d'appui (3) contre la tresse (D), on déplace les moyens d'appui (3) de manière longitudinale par rapport à la tresse (D), on prend appui contre la tresse (D) par l'intermédiaire des moyens d'appui (3) et on assure au moins une rotation des moyens d'appui (3) autour de la tresse (D), ceci selon au moins un sens de rotation.

10. Système d'écartement (13) d'une tresse (D) que comporte un câble électrique (A), ce système d'écartement (13) comporte, d'une part, un châssis (14), d'autre part, un tube creux (15) destiné à recevoir intérieurement une partie, que comporte le câble électrique (A), et qui est entourée par ladite tresse (D), d'autre part encore, une pièce (16), qui comporte un logement (160) à l'intérieur duquel est logée une partie du tube creux (15), et qui présente une face d'appui (161) destinée à venir en appui contre ladite tresse (D), d'autre part aussi, des moyens de montage en translation (17), selon un axe de translation, de la pièce (16) par rapport au tube creux (15), ceci entre une position déployée d'au moins une partie du tube creux (15) hors du logement (161) et une position rétractée d'au moins une partie du tube creux (15) à l'intérieur du logement (161) et, d'autre part également, des moyens de montage en rotation (19), autour d'un axe de rotation, du tube creux (15) et/ou de la pièce (16), ceci par rapport au châssis (14).

11. Système d'écartement (13) selon la revendication 10, **caractérisé par le fait que** le tube creux (15) s'étend selon un axe d'extension qui est au moins parallèle à l'axe de rotation et/ou au moins parallèle à l'axe de translation.

12. Système d'écartement (13) selon l'une quelconque des revendications 10 ou 11, **caractérisé par le fait qu'**il comporte des moyens de positionnement (21), qui s'étendent selon un axe de positionnement qui est au moins parallèle à l'axe de rotation et/ou à l'axe de translation, et qui sont configurés pour positionner ledit câble électrique (A) en sorte qu'il s'étende selon ledit axe de positionnement.

13. Procédé d'écartement d'une tresse (D) que comporte un câble électrique (A), ce procédé consiste en ce que, d'une part, on introduit une partie du câble électrique (A) entourée par la tresse (D) à l'intérieur d'un tube creux (15), d'autre part, on translate une pièce (16) qui comporte un logement (160) à l'intérieur duquel est logée au moins une partie du tube creux (15), ceci par rapport au tube creux (15) et au câble électrique (A), d'autre part encore, on assure une prise d'appui d'une face d'appui (161) que comporte ladite pièce (16) contre la tresse (D) et, d'autre part aussi, on assure une rotation du tube creux et/ou de la pièce par rapport au câble électrique.

14. Installation d'écartement d'une tresse (D) que comporte un câble électrique (A), cette installation comporte, d'une part, un dispositif de pré-écartement (1) d'une telle tresse (D) et, d'autre part, un système d'écartement (13) d'une telle tresse (D), **caractérisée par le fait que**, d'une part, le dispositif de pré-écartement (1) est conforme à l'une quelconque des revendications 1 à 7 et, d'autre part, le système d'écartement (13) est conforme à l'une quelconque des revendications 10 à 12.

15. Installation d'écartement selon la revendication 14, **caractérisée par le fait qu'**elle comporte des moyens de positionnement qui sont configurés pour positionner ledit câble (A) par rapport au dispositif de pré-écartement (1) ainsi que par rapport au système d'écartement (13).

16. Installation d'écartement selon la revendication 15, **caractérisée par le fait qu'**elle comporte des moyens de montage en déplacement qui sont configurés pour monter les moyens de positionnement en déplacement, ceci entre, d'une part, une position de pré-écartement par rapport au dispositif de pré-écartement (1) dans laquelle le câble (A) est positionné par rapport au dispositif de pré-écartement (1) en vue du pré-écartement de la tresse (D) de ce câble (A) et, d'autre part, une position d'écartement par rapport au système d'écartement (13) dans laquelle le câble (A) est positionné par rapport au système d'écartement (13) en vue de l'écartement de la tresse (D) de ce câble (A).

17. Installation d'écartement selon la revendication 16, **caractérisée par le fait que**, d'une part, les moyens de positionnement s'étendent selon un axe de positionnement et sont configurés pour positionner ledit câble (A) en sorte qu'il s'étende selon ledit axe de positionnement et, d'autre part, les moyens de montage en déplacement sont configurés pour monter les moyens de positionnement, soit en translation selon un axe de translation perpendiculaire à l'axe de positionnement, soit en rotation autour d'un axe de rotation perpendiculaire ou parallèle à l'axe de positionnement.

18. Installation d'écartement selon l'une quelconque des revendications 15 à 17, **caractérisée par le fait qu'**elle comporte un support qui comporte, d'une part, au moins une partie fixe sur laquelle sont montées au moins une partie du dispositif de pré-écartement (1) et au moins une partie du système d'écartement (13) et, d'autre part, une partie mobile, sur laquelle sont montés les moyens de positionnement, qui est mobile par rapport à ladite au moins une partie fixe, et plus particulièrement qui est mobile en déplacement par rapport à une partie du dispositif de pré-écartement (1) ainsi que par rapport à une partie du système d'écartement (13).

19. Procédé d'écartement d'une tresse (D) que comporte un câble électrique (A), ce procédé consiste en ce que, d'une part, on pré-écarte la tresse (D) du câble électrique (A) conformément au procédé de pré-écartement selon l'une quelconque des revendications 8 ou 9 et, d'autre part, on écarte la tresse (D) du câble (A) conformément au procédé d'écartement selon la revendication 13.
